# EUROPÄISCHE PATENTSCHRIFT

(11) **EP 1 282 067 B1**
(45) Veröffentlichungstag und Bekanntmachung des Hinweises auf die Patenterteilung: **21.06.2006**
(21) Anmeldenummer: 02017081.7
(22) Anmeldetag: 29.07.2002
(51) Int. Cl.: G06K 7/00, H04B 1/38

(54) **Einteilige Halterung in dünner Bauweise aus einem Stanz-Biegeteil zur einfachen Aufnahme bzw. Entnahme der SIM-Karte**
Thin one-piece holder for SIM-card made of punched metal part
Support mince d'une seule pièce en métal obtenue par estampage pour une carte à puce

(30) Priorität: 03.08.2001 DE 10137486
(43) Veröffentlichungstag der Anmeldung: 05.02.2003
(73) Patentinhaber: BenQ Corporation, Gueishan Taoyuan 333 (TW)
(72) Erfinder: Hackling, Ralf, 46414 Rhede (DE); Richter, Thomas, 47495 Rheinberg (DE); Voigt, Christian, 46509 Xanten (DE); Zielonka, Andreas, 45279 Essen (DE)
(74) Vertreter: Epping - Hermann - Fischer

(56) Entgegenhaltungen:
- EP-A- 0 947 944
- EP-A- 1 030 260
- EP-A- 1 059 600
- GB-A- 2 342 788
- US-A- 5 718 609
- US-A- 6 095 868

## Beschreibung

Die Erfindung bezieht sich auf einen Halter für eine SIM-Karte, bei dem eine Seite der SIM-Karte auf einem Flächenabschnitt des Halters aufliegt und der Halter Mittel zum Verhindern eines Verrutschens der SIM-Karte gegenüber dem Halter aufweist, wobei der Flächenabschnitt des Halters eine Öffnung zur Durchführung von Kontakten für die SIM-Karte aufweist. Beschrieben wird außerdem ein Verfahren zur Herstellung eines solchen Halters.

Solche Halter sind im Wesentlichen flach ausgebildet, wobei sie eine Anlagefläche aufweisen, auf der üblicherweise die Bodenseite der Chip- oder SIM-Karte aufliegt. Weiterhin sind bei dem Halter Mittel vorgesehen, um ein Verrutschen der Chip- oder SIM-Karte auf dem Flächenabschnitt des Halters, an dem die Bodenseite der Karte anliegt, zu vermeiden. Solche Mittel sind beispielsweise erhöhte Ränder des Flächenabschnitts des Halters, auf dem die Karte angeordnet ist.

Bekannte Halter für Chip-Karten oder SIM-Karten werden aus dem Material Kunststoff hergestellt. Diese Materialwahl zieht den Nachteil nach sich, daß zum Erreichen einer ausreichenden Steifigkeit des Halters erhebliche Mindestabmessungen für die Wandstärken des Halters einzuhalten sind. Demgegenüber besteht generell in dem hier relevanten Bereich der Entwicklung von Mobiltelefonen die Tendenz, deren Baugröße zu minimieren. Auch verallgemeinert für Chip- oder Smart-Karten wird eine Verminderung der Außenabmessungen des Halters als vorteilhaft angesehen.

Aus der EP 1 059 600 A2 ist ein tragbares Lesegerät für Smart-Karten bekannt. Ein Abschnitt diese Gerätes kann als Halter für die Smart-Karten angesehen werden. Dieser Halter ist mehrteilig ausgebildet und besteht überwiegend aus Kunststoff-Bauteilen.

Außerdem sind aus den Druckschriften US 5,718,609 A, US 6,095,868 A, EP 0 947 944 A2, EP 1 030 260 A2 und GB 2 342 788 A verschiede Vorrichtungen gemäß dem Oberbegriff des Anspruchs 1 bekannt, die entweder als Kartenlesegeräte oder als Verbinder für eine Chip-/SIM-Karte ausgebildet sind. Ihnen ist gemeinsam, dass sie von ihrem Aufbau her mehrteilig sind und nur Teilkomponenten aus Metall bestehen.

Ausgehend hiervon liegt der Erfindung die Aufgabe zugrunde, einen Halter für eine SIM-Karte bereitzustellen, der hinsichtlich seiner Baugröße vermindert ist und ein Verfahren zu seiner Herstellung anzugeben.

Diese Aufgabe wird bei dem eingangs genannten Halter dadurch gelöst, {s.1}, daß der Halter aus einem metallischen Material hergestellt ist und der Flächenabschnitt des Halters, an dem die Seite der SIM-Karte aufliegt, mit einer elektrisch isolierenden Beschichtung versehen ist.

Durch Vorsehen eines metallischen Materials zur Herstellung des Halters kann die gegenüber Kunststoff erhöhte Steifigkeit des Materials ausgenutzt werden, um die Wandstärke des Halters zu vermindern. Bei aus Kunststoff hergestellten Haltern beträgt beispielsweise die einzuhaltende Mindestdicke 0,5 mm für die Wandstärke, während bei Haltern aus metallischen Material minimale Wanddicken von 0,2 mm möglich sind.

Das Merkmal, daß der Flächenabschnitt des Halters, an dem eine Seite der SIM-Karte aufliegt, mit einer elektrisch isolierenden Beschichtung versehen ist, gewährleistet, daß vorhandene, elektrische Signale tragende Schaltkreise auf der betreffenden Seite der SIM-Karte von dem Halter elektrisch isoliert werden, so daß die Funktionen der SIM-Karte nicht beeinträchtigt werden können.

Es ist als bevorzugt anzusehen, daß der Halter aus Federstahl hergestellt ist, denn das Material Federstahl bietet die erforderliche Steifigkeit, um geringe Wandstärken des Halters verwirklichen zu können.

Bei Einsatz des Materials Federstahl für den Halter kann die gesamte Bauhöhe des Halters auf 1,4 mm reduziert werden, während die Bauhöhe bei Haltern aus Kunststoff nach dem Stand der Technik wenigstens 2 mm betragen.

Bevorzugt wird die isolierende Beschichtung von einer KTL-Beschichtung gebildet, wobei jedoch andere, dauerhafte isolierende Beschichtungen des Halters alternativ möglich sind.

Bevorzugt ist der Halter geerdet, so daß er als Abschirmung für die SIM-Karte gegenüber elektrischen Störfeldern dienen kann.

Hinsichtlich des Verfahrens wird die obige Aufgabe gelöst durch ein Verfahren zur Herstellung eines Halters für eine SIM-Karte mit den Schritten:
a) Formen eines metallischen Flachmaterials zum Halten der SIM-Karte, so daß eine Seite der SIM-Karte an einem Flächenabschnitt des Halters anliegt, daß Mittel zum Verhindern eines Verrutschens der SIM-Karte auf dem Flächenabschnitt vorgesehen sind und der Flächenabschnitt eine Öffnung zur Durchführung von Kontakten für die SIM-Karte aufweist, und
b) Beschichten des Halters mit einer elektrisch isolierenden Beschichtung wenigstens im Bereich des Flächenabschnitts des Halters, an dem die Seite der SIM-Karte anliegt.

Bei dem Verfahren wird bevorzugt in Schritt b) eine KTL-Beschichtung des Halters vorgenommen. Die isolierende Beschichtung ist grundsätzlich nur auf dem Flächenabschnitt des Halters erforderlich, an dem eine Seite der Chip-Karte aufliegt. Aus verfahrensökonomischen Gründen wird es jedoch häufig vorteilhaft sein, den gesamten Halter in einem Tauchvorgang mit einer KTL-Beschichtung zu versehen.

Die KTL-Beschichtung zeichnet sich durch eine günstige Abriebfestigkeit aus. Zum Gewährleisten einer elektrischen Isolierung des aus metallischen Material bestehenden Halters reicht eine Schichtdicke der KTL-Schicht von 5 µm aus. Als bevorzugte Schichtdicke wird ein Bereich zwischen 10 und 20 µm angesehen.

Beispielsweise kann das Tauchbad, das im Rahmen der KTL-Beschichtung eingesetzt wird, 80 Vol% wässrige Lösungsmittel enthalten, wobei der Rest von einer Pigmentpaste gebildet wird.

Die Erfindung wird nachfolgend beispielshalber anhand von Zeichnungen noch näher erläutert. Es zeigen:
- Figur 1:: eine perspektivische Ansicht eines Halters für eine SIM-Karte,
- Figur 2:: eine perspektivische Ansicht des Halters von Figur 1 in dem Zustand, bei dem gerade eine SIM-Karte eingelegt wird,
- Figur 3:: den Halter von Figur 1 mit eingelegter SIM-Karte und
- Figur 4:: den Halter von Figur 1, montiert in einer Unterschale eines Mobiltelefons, wobei in den Halter eine SIM-Karte eingelegt ist.

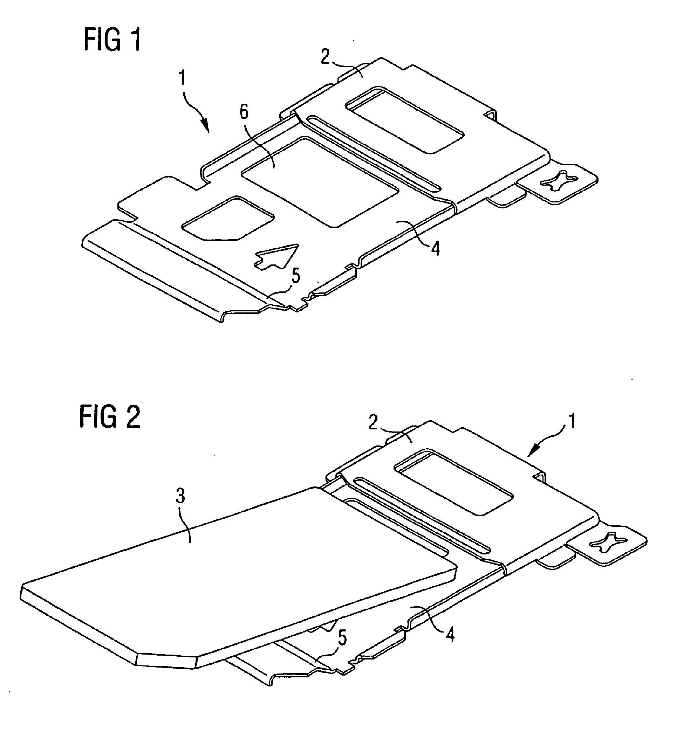

Figur 1 zeigt einen erfindungsgemäßen Halter 1, der einen Laschenabschnitt 2, der zur Aufnahme eines Teils einer SIM-Karte 3 vorgesehen ist, eine Auflagefläche 4 (in Figur 1 teilweise durch den Laschenabschnitt 2 verdeckt) und eine Schräge 5, die gegenüber dem Laschenabschnitt 2 angeordnet ist, aufweist. Wenigstens die Auflagefläche 4 für die SIM-Karte 3 ist mit einer elektrisch isolierenden Beschichtung versehen.

Eine pfeilförmige Öffnung in dem Flächenabschnitt 4 signalisiert die Einführrichtung für die SIM-Karte 3. In Figur 1 ist außerdem eine Öffnung 6 zur Durchführung von Kontakten der SIM-Karte 3 durch den Halter 1 hindurch sichtbar. Es ist noch eine weitere Öffnung in dem Halter vorhanden, die jedoch in den Figuren von dem Laschenabschnitt 2 verdeckt wird.

Aus Figur 2 geht hervor, wie die SIM-Karte 3 in den Halter 1 eingelegt wird. Die SIM-Karte 3 wird zunächst über die Schräge 5 bis zu dem Laschenabschnitt 2 geschoben und anschließend in derselben Richtung weiterbewegt, so daß die SIM-Karte 3 teilweise in dem Laschenabschnitt 2 untergebracht wird. Senkrecht zur Einführrichtung der SIM-Karte 3 sind die Materialabschnitte am Rand der Auflagefläche 4 umgebogen, um ein Verrutschen der SIM-Karte 3 gegenüber der Auflagefläche 4 zu vermeiden. Außerdem ist die SIM-Karte 3 am Fuß der Schräge 5 abgestützt, sobald die SIM-Karte 3 eingelegt ist.

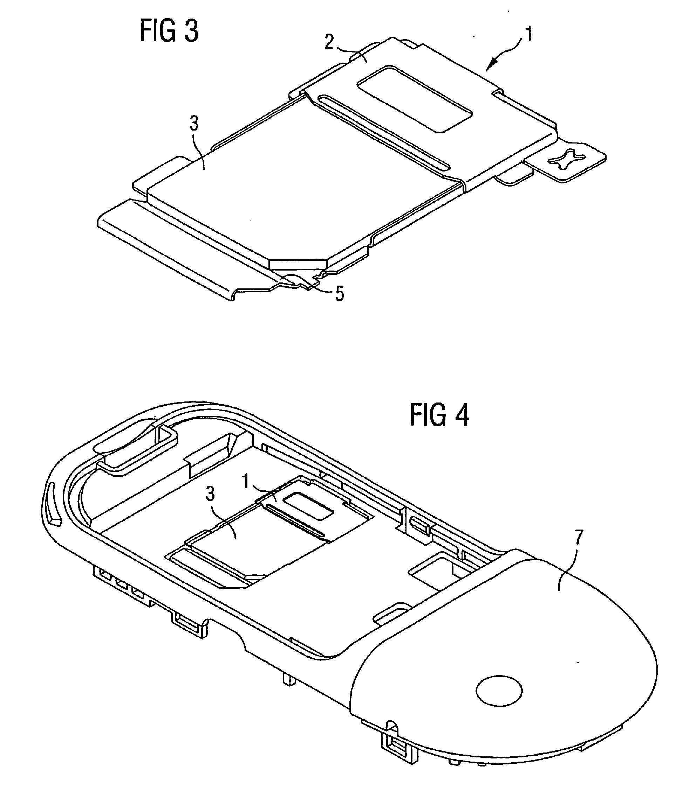

Nach dem Einlegen der SIM-Karte 3 in den Halter 1 ergibt sich der Zustand, der in Figur 3 veranschaulicht ist.

Figur 4 zeigt, wie der Halter 1 mit eingelegter SIM-Karte in einer Unterschale 7 eines Mobiltelefons integriert ist.

Der Halter 1 ist aus einem Federstahlband mit einer Dicke von 0,2 mm hergestellt. Zunächst werden aus dem Stahlband mittels eines Formwerkzeuges durch Stanzen und Biegen einzelne Halter geformt, die nachfolgend einer kathodischen Elektrotauchlackierung unterzogen werden. Der Elektrotauchlack bildet eine Beschichtung einer Dicke von 15µm. Die gesamte Bauhöhe des Halters 1 beträgt bei diesem Ausführungsbeispiel 1,4 mm.

Bei einem weiteren Ausführungsbeispiel kann der Halter 1 geerdet sein, um als elektrische Abschirmung gegenüber elektrischen Störfeldern zu dienen, vor denen die SIM-Karte zu schützen ist.

## Patentansprüche

1. Halter (1) für eine SIM-Karte (3), bei dem Seite der SIM-Karte (3) auf einem Flächenabschnitt (4) des Halters (1) aufliegt und der Halter (1) Mittel zum Verhindern eines Verrutschens der SIM-Karte (3) gegenüber dem Halter (1) aufweist,
**dadurch gekennzeichnet,**
**daß** der Flächenabschnitt (4) des Halters (1) eine Öffnung (6) zur Durchführung von Kontakten für die SIM-Karte (3) aufweist,
**daß** der Halter (1) aus einem metallischen Material hergestellt ist und
der Flächenabschnitt (4) des Halters (1), an dem die Seite der SIM-Karte (3) aufliegt, mit einer elektrisch isolierenden Beschichtung versehen ist.

2. Halter nach Anspruch 1,
**dadurch gekennzeichnet,**
**daß** er aus Federstahl hergestellt ist.

3. Halter nach einem der Ansprüche 1 oder 2,
**dadurch gekennzeichnet,**
**daß** die isolierende Beschichtung von einer KTL-Beschichtung gebildet wird.

4. Halter nach einem der Ansprüchen 1 - 3,
**dadurch gekennzeichnet,**
**daß** er geerdet ist.

5. Verfahren zur Herstellung eines Halters (1) für eine SIM-Karte (3) mit den Schritten:
a) Formen eines metallischen Flachmaterials zum Halten der SIM-Karte (3), so daß eine Seite der SIM-Karte (3) an einem Flächenabschnitt (4) des Halters (1) anliegt, daß Mittel zum Verhindern eines Verrutschens der SIM-Karte (3) auf dem Flächenabschnitt (4) vorgesehen sind und der Flächenabschnitt (4) eine Öffnung (6) zur Durchführung von Kontakten für die SIM-Karte (3) aufweist, und
b) Beschichten des Halters (1) mit einer elektrisch isolierenden Beschichtung wenigstens im Bereich des Flächenabschnitts (4) des Halters (1), an dem die Seite der SIM-Karte (3) anliegt.

6. Verfahren nach Anspruch 5,
bei dem in Schritt b) eine KTL-Beschichtung des Halters (1) vorgenommen wird.

## Claims

1. Holder (1) for a SIM card (3), in which a side of the SIM card (3) rests on a surface section (4) of the holder (1), and the holder (1) comprises means for preventing the SIM card (3) from slipping with respect to the holder (1),
**characterized in that**,
the surface section (4) of the holder (1) has a hole (6) for the passage of contacts for the SIM card (3),
that the holder (1) is made from a metal material,
and the surface section (4) of the holder (1) on which the side of the SIM card (3) rests is provided with an electrically insulating coating.

2. Holder according to Claim 1,
**characterized in that**
it is made from spring steel.

3. Holder according to one of the Claims 1 or 2,
**characterized in that**
the insulating coating is formed by a cathodic dip coating.

4. Holder according to one of the Claims 1 to 3,
**characterized in that**
it is earthed.

5. Method for manufacturing a holder (1) for a SIM card (3) having the steps of:
a) forming a flat metal material for holding the SIM card (3), so that a side of the SIM card (3) rests on a surface section (4) of the holder (1), that means are provided for preventing slipping of the SIM card (3) on the surface section (4), and the surface section (4) has a hole (6) for the passage of contacts for the SIM card (3), and
b) coating of the holder (1) with an electrically insulating coating at least in the area of the surface section (4) of the holder (1) on which the side of the SIM card (3) rests.

6. Method according to Claim 5,
in which the holder (1) is coated in a cathodic dip coating procedure in step b).

## Revendications

1. Support (1) pour une carte SIM (3), dans lequel un côté de la carte SIM (3) repose sur un segment de surface (4) du support (1) et le support (1) est pourvu de moyens pour empêcher un glissement de la carte SIM (3) par rapport au support (1),
**caractérisé en ce que** le segment de surface (4) du support (1) est pourvu d'une ouverture (6) pour faire passer des contacts pour la carte SIM (3),
**en ce que** le support (1) est fabriqué dans un matériau métallique et
le segment de surface (4) du support (1) sur lequel repose le côté de la carte SIM (3) est pourvu d'un revêtement isolant électrique.

2. Support selon la revendication 1, **caractérisé en ce qu'**il est fabriqué dans un acier à ressorts.

3. Support selon l'une des revendications 1 ou 2, **caractérisé en ce que** le revêtement isolant est formé d'un revêtement KTL.

4. Support selon l'une des revendications 1-3, **caractérisé en ce qu'**il est relié à la terre.

5. Procédé de fabrication d'un support (1) pour une carte SIM (3), comprenant les étapes de :
a) formation d'un matériau plat métallique pour supporter la carte SIM (3), de manière à ce qu'un côté de la carte SIM (3) soit en contact avec un segment de surface (4) du support (1), à ce que des moyens pour empêcher un glissement de la carte SIM (3) sur le segment de surface (4) soient prévus et à ce que le segment de surface (4) soit pourvu d'une ouverture (6) pour faire passer des contacts pour la carte SIM (3) et
b) revêtement du support (1) avec un revêtement isolant électrique au moins dans la zone du segment de surface (4) du support (1) avec lequel le côté de la carte SIM (3) est en contact.

6. Procédé selon la revendication 5, dans lequel est réalisé un revêtement KTL du support (1) dans l'étape b).
